# FASCICULE DE BREVET EUROPEEN

(11) **EP 4 050 427 B1**
(45) Date de publication et mention de la délivrance du brevet: **11.09.2024**
(21) Numéro de dépôt: 21159045.0
(22) Date de dépôt: 24.02.2021
(51) Int. Cl.: G04G 21/04, G04B 47/00, G04G 21/02, G01W 1/10

(54) **DISPOSITIF D'AFFICHAGE DE LA METEO A LA DEMANDE**
ON-DEMAND-WETTERANZEIGEVORRICHTUNG
DEVICE FOR DISPLAYING THE WEATHER FORECAST ON REQUEST

(43) Date de publication de la demande: 31.08.2022
(73) Titulaire: The Swatch Group Research and Development Ltd, 2074 Marin (CH)
(72) Inventeur: SPRINGER, Simon, 3007 Berne (CH)
(74) Mandataire: ICB SA

(56) Documents cités:
- EP-A2- 3 158 404
- EP-B1- 3 158 404

## Description

### Domaine technique

La présente demande concerne le domaine de l'horlogerie et plus particulièrement la représentation de la météo. De préférence, la présente invention se rapporte à une représentation de la météo en fonction de certains paramètres et/ou à la demande de l'utilisateur.

### Arrière-plan technologique

La plupart des représentations météorologiques sont présentes sur des écrans de montres intelligentes ayant un afficheur numérique. Or cette représentation consomme une part importante de l'énergie de la montre intelligente et de la place disponible sur l'écran en regards de la fréquence de rafraîchissement de l'information.

La demande de brevet EP 3 158 404 A2 concerne une horloge baromètre comprenant un cadran d'horloge, un mécanisme d'horloge comprenant: une tige située dans le cadran et entraînée par le mécanisme et des aiguilles rotatives montées sur la tige pour permettre l'affichage de l'heure; et un mécanisme de baromètre comprenant un capteur barométrique, des moyens d'entraînement et un arbre d'entraînement et une pluralité d'éléments d'affichage situés derrière le cadran d'horloge, chaque élément étant mis en prise avec l'arbre d'entraînement par un mécanisme d'engrenage et pouvant être entraîné en rotation par l'arbre en réponse à un signal par le capteur barométrique; le cadran d'horloge comprenant une ouverture, chaque élément d'affichage pouvant être entraîné en rotation entre un emplacement visible respectif dans lequel l'élément d'affichage peut être observé à travers l'ouverture et un emplacement caché respectif dans lequel l'élément d'affichage est dissimulé par le cadran d'horloge; les mécanismes d'engrenage étant conçus pour déplacer successivement les éléments d'affichage entre des emplacements cachés et visibles lorsque l'arbre d'entraînement entre en rotation pour permettre une fonction d'affichage des conditions météorologiques associées à des conditions de pression mesurées par le capteur barométrique.

### Résumé de l'invention

La présente invention vise à résoudre tout ou partie des inconvénients mentionnés ci-dessus par l'intermédiaire d'un dispositif d'affichage pour pièce d'horlogerie et de préférence à la demande ; ledit dispositif d'affichage comprenant au moins un :
- un premier organe indicateur: ledit au moins un premier organe indicateur, de préférence étant monté mobile et, comportant au moins une représentation du soleil ;
- un deuxième organe indicateur : ledit au moins un deuxième organe indicateur, de préférence étant monté mobile et, comportant au moins un élément occultant configuré pour occulter ladite au moins une représentation du soleil ;
- un premier entraîneur : ledit au moins un premier entraîneur configuré pour entraîner ledit au moins un premier organe indicateur et/ou ledit au moins un deuxième organe indicateur ; et,
- une unité de commande : ladite au moins une unité de commande étant configurée pour commander, en fonction d'un ensemble de données, ledit au moins un premier entraîneur de sorte à entraîner et/ou à superposer ledit au moins un premier organe indicateur et/ou ledit au moins un deuxième organe indicateur de manière à ce que ladite au moins une représentation du soleil soit totalement ou partiellement occultée par ledit au moins un élément occultant.

Grâce à cette disposition, les prévisions météorologiques sont représentées sans qu'un espace sur le cadran leur soient spécialement dédiées, et d'autre part, le dispositif d'affichage permet à l'utilisateur d'avoir une représentation dynamique de la météo et de la manière la plus fidèle.

Selon un mode de réalisation, ladite au moins une unité de commande commande ledit au moins un premier entraîneur à la demande de l'utilisateur.

Grâce à cette disposition, les prévisions météorologiques sont représentées à l'utilisateur de la manière la plus fidèle en fonction du moment où l'utilisateur l'a demandée.

Selon un mode de réalisation, ledit ensemble de données comporte au moins :
- une donnée météorologique ;
- une date ;
- une heure ; et/ou
- une position géographique.

Grâce à cette disposition, les prévisions météorologiques sont représentées à l'utilisateur de la manière la plus fidèle en fonction d'un moment et/ou d'un endroit à la demande de l'utilisateur.

Selon un mode de réalisation, ledit ensemble de données est reçu par ladite au moins une unité de commande via radiofréquences, via géo-positionnement par satellite, et/ou via communication filaire et/ou optique.

Grâce à cette disposition, les prévisions météorologiques sont représentées à l'utilisateur de la manière la plus fidèle en fonction du moment et/ou de l'endroit où l'utilisateur l'a demandée.

Selon un mode de réalisation, ledit dispositif d'affichage comprend au moins un deuxième entraîneur configuré pour entraîner ledit au moins un deuxième organe indicateur.

Grâce à cette disposition, ledit au moins un premier entraîneur et ledit au moins un deuxième entraîneur peuvent déplacer ledit au moins un premier organe indicateur et ledit au moins un deuxième organe indicateur indépendamment.

Selon un mode de réalisation, ladite au moins une représentation du soleil est plus claire que ledit au moins un élément occultant et/ou ledit au moins un élément occultant et/ou ladite au moins une représentation du soleil présente ou présentent une forme arrondie, ronde, elliptique, de disque et/ou sphérique.

Selon un mode de réalisation, ledit au moins un élément occultant est plus sombre que ladite au moins une représentation du soleil.

Grâce à l'une ou l'autre de ces dispositions précédentes, ladite au moins une représentation du soleil se rapproche de la réalité.

Selon un mode de réalisation, ledit au moins un élément occultant comprend au moins une ouverture, de préférence en forme d'éclair, configurée pour laisser apparaître partiellement ladite au moins une représentation du soleil.

Grâce à cette disposition, il est possible de représenter un temps orageux.

Selon un mode de réalisation, ledit au moins un élément occultant est plus photoabsorbant que ladite au moins une représentation du soleil et/ou ladite au moins une représentation du soleil est essentiellement plus réfléchissante que ledit au moins un élément occultant.

Grâce à cette disposition, ladite au moins une représentation du soleil réfléchit ou diffuse la lumière à la manière de la météo et/ou ledit au moins un élément occultant absorbe la lumière.

Selon un mode de réalisation, ladite au moins une unité de commande étant configurée pour commander ledit au moins un premier entraîneur de sorte à entraîner ledit au moins un premier organe indicateur totalement ou partiellement en-dessous dudit au moins un deuxième organe indicateur de manière à ce que ladite au moins une représentation du soleil soit totalement ou partiellement occultée par ledit au moins un élément occultant, ou à entraîner ledit au moins un deuxième organe indicateur totalement ou partiellement au-dessus dudit au moins un premier organe indicateur de manière à ce que ladite au moins une représentation du soleil soit totalement ou partiellement occultée par ledit au moins un élément occultant.

Grâce à cette disposition, les prévisions météorologiques sont représentées sans qu'un espace sur le cadran leur soient spécialement dédiées, et d'autre part, le dispositif d'affichage permet à l'utilisateur d'avoir une représentation dynamique de la météo et de la manière la plus fidèle.

Selon un mode de réalisation, ledit au moins un premier organe indicateur est mobile autour d'un premier axe de rotation et comprend une première extrémité proximale proche dudit premier axe de rotation et/ou une première extrémité distale distante dudit premier axe de rotation, et/ou dans lequel ledit au moins un deuxième organe indicateur est mobile autour d'un deuxième axe de rotation et comprend une deuxième extrémité proximale proche dudit deuxième axe de rotation et/ou une deuxième extrémité distale distante dudit deuxième axe de rotation ; ladite au moins une représentation du soleil étant à ladite première extrémité distale ou à ladite première extrémité proximale et/ou ledit au moins un élément occultant étant à ladite deuxième extrémité distale ou à ladite deuxième extrémité proximale.

Grâce à cette disposition, les prévisions météorologiques sont représentées à l'extrémité dudit ou aux extrémités desdits au moins un premier organe indicateur et/ou au moins un deuxième organe indicateur.

Selon un mode de réalisation, ledit au moins un premier organe indicateur est configuré pour indiquer la position du soleil par rapport à l'horizon.

Grâce à cette disposition, l'utilisateur connaît la position du soleil dans le ciel au moment où la demande est faite.

Selon un mode de réalisation, ledit au moins un premier organe indicateur est configuré pour indiquer la position du soleil par rapport aux points cardinaux.

Grâce à cette disposition, l'utilisateur connaît la position du soleil dans le ciel au moment où la demande est faite.

Selon l'invention telle que revendiquée dans le jeu de revendications annexé, ledit au moins un premier organe indicateur est l'aiguille des heures ou l'aiguille des minutes et/ou ledit au moins un deuxième organe indicateur est l'aiguille des minutes ou l'aiguille des heures.

Grâce à cette disposition, les prévisions météorologiques sont représentées sans qu'un espace sur le cadran leur soient spécialement dédiées, tout en utilisant des éléments déjà présents.

Selon un mode de réalisation, ledit dispositif d'affichage comprend une aiguille des secondes (130) indiquant la ligne d'horizon et étant entraînée par ledit au moins un premier entraîneur, ledit au moins un deuxième entraîneur et/ou au moins un troisième entraîneur.

Grâce à cette disposition, les prévisions météorologiques sont représentées sans qu'un espace sur le cadran leur soient spécialement dédiées, tout en utilisant des éléments déjà présents.

Selon un mode de réalisation, le dispositif d'affichage comprend un guichet configuré pour indiquer ladite date du jour et/ou ladite date de la météo indiquée lorsque l'utilisateur en fait la demande.

Selon un mode de réalisation, ladite date du jour et/ou ladite date de la météo est indiquée lorsque l'utilisateur en fait la demande.

Selon un mode de réalisation, le dispositif d'affichage comprend un guichet configuré pour indiquer ledit jour de la semaine et/ou ledit jour de la météo indiquée lorsque l'utilisateur en fait la demande.

Selon un mode de réalisation, ledit jour de la semaine et/ou ledit jour de la météo est indiqué lorsque l'utilisateur en fait la demande.

La présente invention vise à résoudre tout ou partie des inconvénients précédemment cités par l'intermédiaire d'un procédé d'affichage d'au moins une prévision météorologique mise en oeuvre par au moins un dispositif d'affichage selon un mode de réalisation de la présente invention, après réception d'un ensemble de données ; ledit procédé d'affichage comprenant au moins une :
- Commande dudit au moins un premier entraîneur et/ou dudit au moins un deuxième entraîneur par ladite au moins une unité de commande ; et,
- Entraînement dudit au moins un premier organe indicateur et/ou dudit au moins un deuxième organe indicateur de sorte à afficher une prévision météorologique.

Grâce à cette disposition, les prévisions météorologiques sont représentées sans qu'un espace sur le cadran leur soient spécialement dédiées, et d'autre part, le dispositif d'affichage permet à l'utilisateur d'avoir une représentation dynamique de la météo et de la manière la plus fidèle.

Selon un mode de réalisation, ledit procédé d'affichage comprend au moins une incrémentation de ladite date après chaque dite au moins une commande et entraînement de sorte à afficher une prévision météorologique horaire, journalière, et/ou hebdomadaire.

### Brève description des figures

L'invention sera décrite ci-après de manière plus détaillée à l'aide des dessins annexés, donnés à titre d'exemples nullement limitatifs, dans lesquels :
- La figure 1 illustre au moins une représentation du soleil **111** et au moins un élément occultant **121** selon un mode de réalisation de l'invention ;
- Les figures 2 et 3 présentent une position relative de ladite au moins une représentation du soleil **111** et au moins un élément occultant **121** en fonction de certains paramètres et/ou à la demande de l'utilisateur, selon des modes de réalisation de l'invention ;
- Les figures 4A et 4B exposent un mode de réalisation selon l'invention ; et,
- Les figures 5-7 montrent des prévisions météorologiques journalières ou horaires.

### Description détaillée de l'invention

Il existe différentes montres sur le marché. La plupart des montres intelligentes, plus communément appelées Smart watches, proposent une prévision météorologique sur un afficheur numérique. Toutefois, cette prévision est affichée une grande partie du temps alors que l'utilisateur ne s'y réfère que quelques fois, ce qui entrainent une consommation disproportionnée et une réduction de la zone d'affichage utilisable.

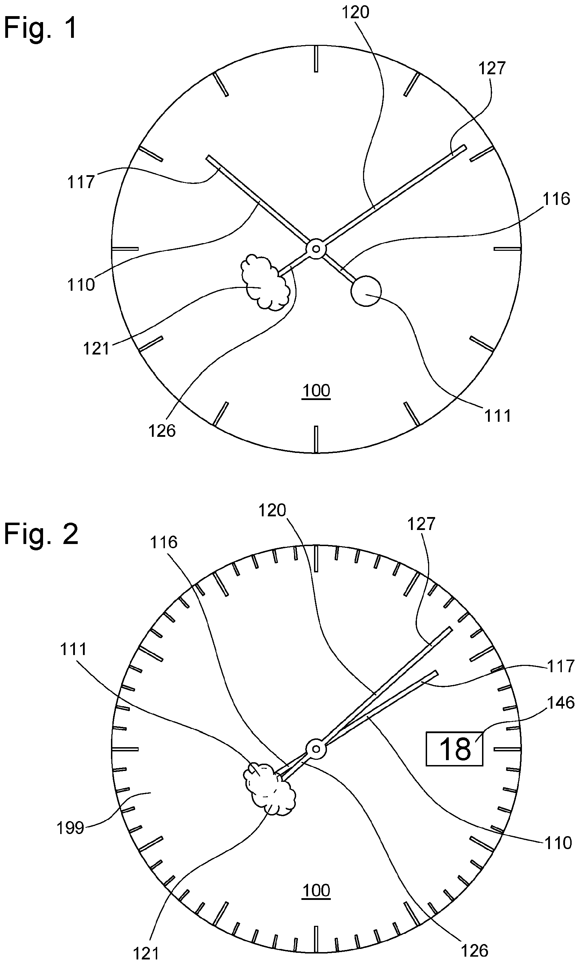

Pour ce faire, la présente invention, représentée sur la figure 1, propose un dispositif d'affichage **100** pour pièce d'horlogerie et de préférence à la demande. Ledit dispositif d'affichage **100** comprenant au moins un premier organe indicateur **110,** au moins un deuxième organe indicateur **120,** au moins un premier entraîneur et au moins une unité de commande.

Ledit au moins un premier organe indicateur **110,** de préférence étant monté mobile et, comporte au moins une représentation du soleil **111** par exemple et ledit au moins un deuxième organe indicateur **120,** de préférence étant monté mobile et, comporte au moins un élément occultant **121** configuré pour occulter ladite au moins une représentation du soleil **111,** comme cela est observable sur la figure 2.

Ledit au moins un premier entraîneur peut être configuré pour entraîner ledit au moins un premier organe indicateur **110** et/ou ledit au moins un deuxième organe indicateur **120** et être commandé par ladite au moins une unité de commande à la demande de l'utilisateur. Selon un mode de réalisation, ledit dispositif d'affichage **100** peut comprendre au moins un deuxième entraîneur configuré pour entraîner ledit au moins un deuxième organe indicateur **120,** de sorte que ledit au moins un premier entraîneur et ledit au moins un deuxième entraîneur peuvent déplacer ledit au moins un premier organe indicateur **110** et le ledit au moins un deuxième organe indicateur **120** indépendamment.

De plus, comme mentionné ci-avant, ledit au moins un premier organe indicateur **110,** typiquement l'aiguille des heures ou l'aiguille des minutes, peut être mobile autour d'un premier axe de rotation et peut comprendre une première extrémité proximale **116** proche dudit premier axe de rotation et/ou une première extrémité distale **117** distante dudit premier axe de rotation et ledit au moins un deuxième organe indicateur **120,** classiquement l'aiguille des minutes ou l'aiguille des heures respectivement, peut être mobile autour d'un deuxième axe de rotation et peut comprendre une deuxième extrémité proximale **126** proche dudit deuxième axe de rotation et/ou une deuxième extrémité distale **127** distante dudit deuxième axe de rotation. Sur les différentes figures 1 à 3, ladite au moins une représentation du soleil **111** est située sur ladite première extrémité proximale **116** et ledit au moins un élément occultant **121** est situé sur ladite deuxième extrémité proximale **126** par exemple, et il est tout à fait possible que ladite au moins une représentation du soleil **111** et ledit au moins un élément occultant **121** se trouvent sur ladite première extrémité distale **117** et ladite deuxième extrémité distale **127** respectivement de sorte que les prévisions météorologiques peuvent être représentées à l'extrémité dudit ou aux extrémités desdits au moins un premier organe indicateur **110** et/ou au moins un deuxième organe indicateur **120,** sans qu'un espace sur le cadran **199** leur soient spécialement dédiées, tout en utilisant des éléments déjà présents.

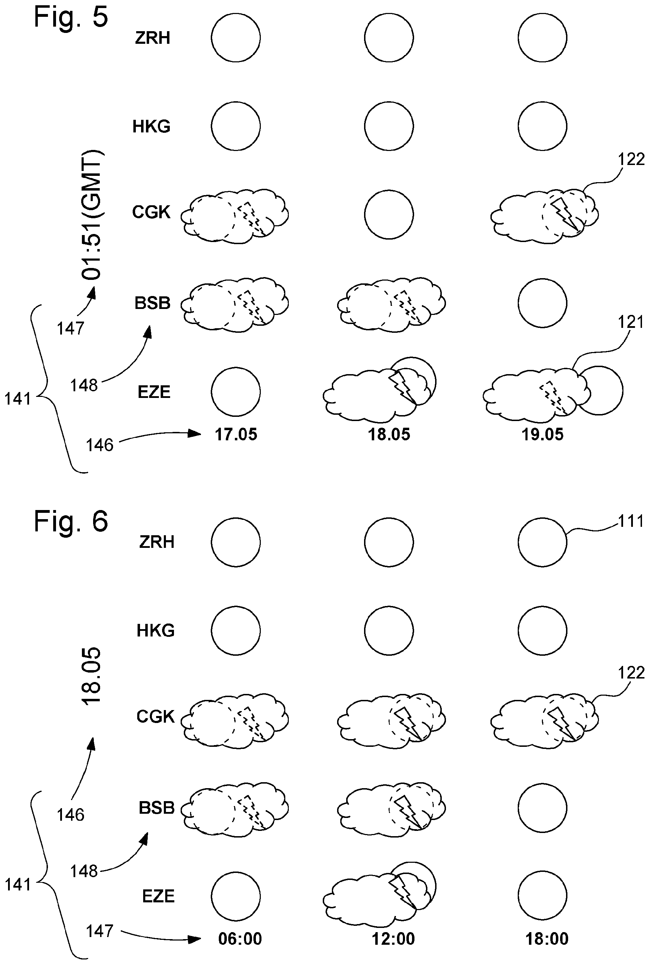

Ladite au moins une unité de commande, quant à elle, peut être configurée pour commander, en fonction d'un ensemble de données **141,** comme cela est visible sur les figures 5-7, ledit au moins un premier entraîneur de sorte à entraîner et/ou à superposer ledit au moins un premier organe indicateur **110** et/ou ledit au moins un deuxième organe indicateur **120** de manière à ce que ladite au moins une représentation du soleil **111** soit totalement ou partiellement occultée par ledit au moins un élément occultant **121,** et ainsi que les prévisions météorologiques soient représentées sans qu'un espace sur le cadran **199** leur soient spécialement dédiées, et d'autre part, le dispositif d'affichage **100** permet à l'utilisateur d'avoir une représentation dynamique de la météo et de la manière la plus fidèle.

En effet, ledit ensemble de données **141,** représenté sur les figures 5 et 6, que peut recevoir ladite au moins une unité de commande, peut comporter, au moins une donnée météorologique **145,** au moins une date **146,** au moins une heure **147** et/ou au moins une position géographique **148** afin que les prévisions météorologiques puissent être représentées à l'utilisateur de la manière la plus fidèle en fonction d'un moment et/ou d'un endroit demandé, et ce manière journalière et/ou horaire.

Par ailleurs, ledit ensemble de données **141** peut être reçu par ladite au moins une unité de commande via radiofréquences, via géo-positionnement par satellite, et/ou via communication filaire et/ou optique.

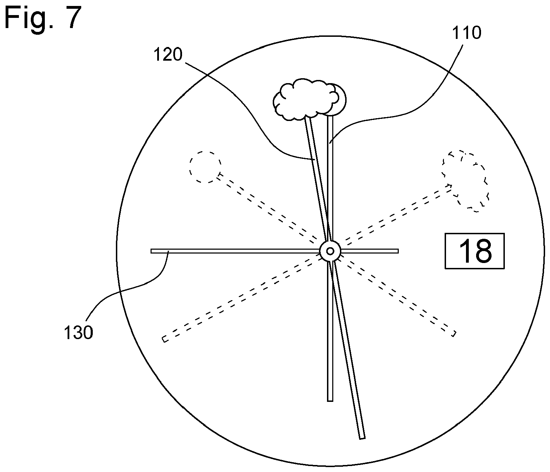

De plus, ledit ensemble de données **141** peut être utilisé par un procédé d'affichage **500** d'au moins une prévision météorologique mise en oeuvre par ladite au moins une unité de commande. En effet, ledit procédé d'affichage **500** peut utiliser ledit ensemble de données **141** afin de permettre la commande dudit au moins un premier entraîneur et/ou dudit au moins un deuxième entraîneur par ladite au moins une unité de commande et l'entraînement dudit au moins un premier organe indicateur **110** et/ou dudit au moins un deuxième organe indicateur **120** de sorte à afficher une prévision météorologique comme cela est représenté sur la figure 7.

En effet, une fois ledit ensemble de données **141** reçu, ladite au moins une unité de commande actionne ledit au moins un premier entraîneur et/ou ledit au moins un deuxième entraîneur de sorte que ledit au moins un premier organe indicateur **110** et/ou ledit au moins un deuxième organe indicateur **120** se déplacent en fonction dudit ensemble de données **141.** Dès lors, ledit au moins un premier organe indicateur **110** et/ou ledit au moins un deuxième organe indicateur **120** qui indiquait ou indiquaient l'heure, se déplacent pour indiquer la météo en fonction de ladite au moins une heure **147.** Par exemple, si la matinée est ensoleillée, ladite au moins une représentation du soleil **111** est placée entre 9h et 11h par exemple, et si l'après-midi est nuageuse ladite au moins une représentation du soleil **111** est placée entre 3h et 9h et ledit au moins un élément occultant **121** est placé entre 1h et 3h par exemple. Si la journée est nuageuse ladite au moins une représentation du soleil **111** et ledit au moins un élément occultant **121** se placent à 12h, comme cela est représenté sur la figure 7.

Pour ce faire, ledit au moins un premier entraîneur peut entraîner ledit au moins un premier organe indicateur **110** totalement ou partiellement en-dessous dudit au moins un deuxième organe indicateur **120** de manière à ce que ladite au moins une représentation du soleil **111** soit totalement ou partiellement occultée par ledit au moins un élément occultant **121,** ou à entraîner ledit au moins un deuxième organe indicateur **120** totalement ou partiellement au-dessus dudit au moins un premier organe indicateur **110** de manière à ce que ladite au moins une représentation du soleil **111** soit totalement ou partiellement occultée par ledit au moins un élément occultant **121.**

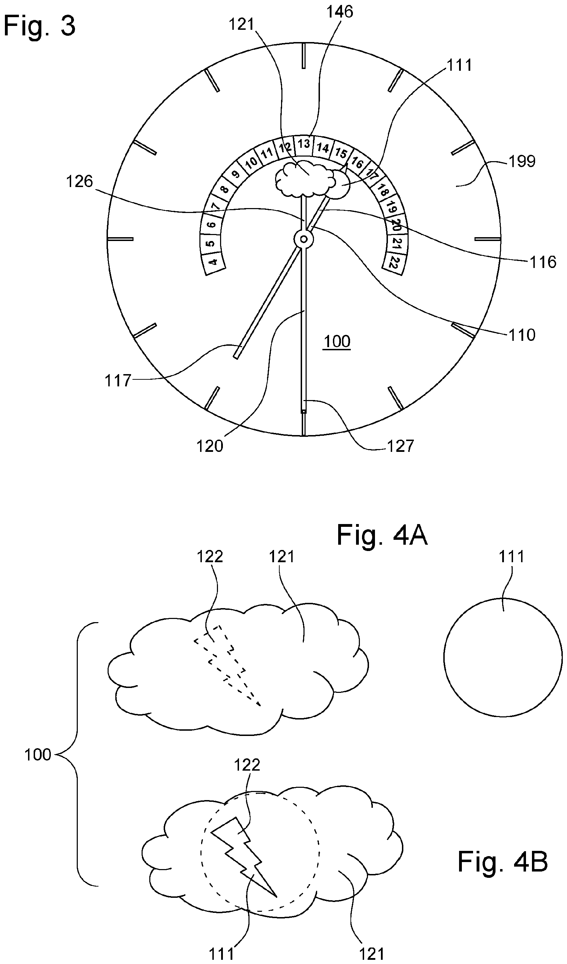

La demanderesse a également envisagé que le dispositif d'affichage puisse comprendre un guichet configuré pour indiquer ladite date **146** du jour et/ou ladite date de la météo indiquée lorsque l'utilisateur en fait la demande, comme cela est représenté sur la figure 3. Sur un mode de réalisation similaire, ladite date **146** du jour et/ou ladite date de la météo peut être indiquée lorsque l'utilisateur en fait la demande. Ledit procédé d'affichage **500** peut également comprendre au moins une incrémentation de ladite date **146** après chaque dite au moins une commande et entraînement de sorte à afficher une prévision météorologique horaire, journalière, et/ou hebdomadaire.

Comme représentée sur la figure 1 par exemple, ladite au moins une représentation du soleil **111,** avec une forme arrondie, ronde, elliptique, de disque et/ou sphérique par exemple, peut être plus claire et/ou essentiellement plus réfléchissante que ledit au moins un élément occultant **121,** qui peut représenter un nuage par exemple. Selon d'autres modes de réalisation, il peut être également possible de prévoir que ledit au moins un élément occultant **121** peut être en matériau plus photoabsorbant que ladite au moins une représentation du soleil **111.**

. Par ailleurs, ladite au moins une représentation du soleil **111** peut comprendre un matériau en or et/ou cuivré par exemple, afin de représenter le soleil, et de l'autre côté, ledit au moins un élément occultant **121** peut être en argent, en titane, en aluminium, en acier, en laiton et/ou en platine par exemple. Un revêtement, comme une couche déposée par des moyens physiques, chimiques, galvaniques ou une dépose manuelle comme une laque ou un vernis, peut permettre d'ajuster la couleur et l'aspect des indicateurs.

Ledit dispositif d'affichage **100** pour pièce d'horlogerie, de préférence de montre, peut également indiquer l'élévation du soleil et/ou la position du soleil par rapport à l'horizon par l'intermédiaire dudit au moins un premier organe indicateur **110** et l'aiguille des secondes (130), qui peut indiquer la ligne d'horizon et être entraînée par ledit au moins un premier entraîneur ledit au moins un deuxième entraîneur et/ou au moins un troisième entraîneur, afin que l'utilisateur connaisse la position du soleil dans le ciel.

Enfin, lorsque le ciel est couvert, c'est-à-dire sans visibilité du ciel et du soleil, ledit au moins un premier organe indicateur **110** peut être configuré pour indiquer la position du soleil par rapport aux points cardinaux par exemple.

## Revendications

1. Dispositif d'affichage (100) de la météo à la demande pour pièce d'horlogerie, cette pièce d'horlogerie comprenant au moins une aiguille des heures et une aiguille des minutes ; ledit dispositif d'affichage (100) comprenant au moins un :
- un premier organe indicateur (110) : ledit au moins un premier organe indicateur (110), étant l'aiguille des heures ou l'aiguille des minutes montée mobile et, comportant au moins une représentation du soleil (111) ;
- un deuxième organe indicateur (120) : ledit au moins un deuxième organe indicateur (120), étant l'aiguille des minutes ou l'aiguille des heures montée mobile et, comportant au moins un élément occultant (121) configuré pour occulter ladite au moins une représentation du soleil (111) ;
- un premier entraîneur : ledit au moins un premier entraîneur configuré pour entraîner ledit au moins un premier organe indicateur (110) et ledit au moins un deuxième organe indicateur (120) ; et,
- une unité de commande : ladite au moins une unité de commande étant configurée pour commander, en fonction d'un ensemble de données (141), ledit au moins un premier entraîneur de sorte à entraîner et/ou à superposer ledit au moins un premier organe indicateur (110) et ledit au moins un deuxième organe indicateur (120) de manière à ce que ladite au moins une représentation du soleil (111) soit totalement ou partiellement occultée par ledit au moins un élément occultant (121).

2. Dispositif d'affichage (100) selon la revendication 1, dans lequel ladite au moins une unité de commande commande ledit au moins un premier entraîneur à la demande de l'utilisateur.

3. Dispositif d'affichage (100) selon la revendication 1 ou 2, dans lequel ledit ensemble de données (141) comporte au moins :
- une donnée météorologique (145) ;
- une date (146) ;
- une heure (147) ; et/ou
- une position géographique (148).

4. Dispositif d'affichage (100) selon la revendication 3, dans lequel ledit ensemble de données (141) est reçu par ladite au moins une unité de commande via radiofréquences, via géo-positionnement par satellite, et/ou via communication filaire et/ou optique.

5. Dispositif d'affichage (100) selon l'une quelconques des revendications précédentes, lequel comprend au moins un deuxième entraîneur configuré pour entraîner ledit au moins un deuxième organe indicateur (120).

6. Dispositif d'affichage (100) selon l'une quelconques des revendications précédentes, dans lequel ledit au moins un élément occultant (121) comprend au moins une ouverture (122), de préférence en forme d'éclair, configurée pour laisser apparaître partiellement ladite au moins une représentation du soleil (111).

7. Dispositif d'affichage (100) selon l'une quelconques des revendications précédentes, dans lequel ledit au moins un premier organe indicateur (110) est configuré pour indiquer la position du soleil par rapport à l'horizon.

8. Dispositif d'affichage (100) selon l'une quelconques des revendications précédentes, dans lequel ledit au moins un premier organe indicateur (110) est configuré pour indiquer la position du soleil par rapport aux points cardinaux.

9. Dispositif d'affichage (100) selon l'une quelconques des revendications précédentes, lequel comprenant une aiguille des secondes (130) indiquant la ligne d'horizon et étant entraînée par ledit au moins un premier entraîneur, ledit au moins un deuxième entraîneur et/ou au moins un troisième entraîneur.

10. Procédé d'affichage (500) d'au moins une prévision météorologique mis en oeuvre par au moins un dispositif d'affichage (100) selon l'une quelconques des revendications 1 à 9 après réception d'un ensemble de données (141); ledit procédé d'affichage (500) comprenant au moins une :
- Commande dudit au moins un premier entraîneur, dudit au moins un deuxième entraîneur et/ou au moins un troisième entraîneur par ladite au moins une unité de commande ; et,
- Entraînement dudit au moins un premier organe indicateur (110) qui est l'aiguille des heures ou l'aiguille des minutes et dudit au moins un deuxième organe indicateur (120) qui est l'aiguille des minutes ou l'aiguille des heures de sorte à afficher une prévision météorologique.

11. Procédé d'affichage (500) selon la revendication 10, lequel comprend au moins une incrémentation de ladite date (146) après chaque dite au moins une commande et entraînement de sorte à afficher une prévision météorologique horaire, journalière, et/ou hebdomadaire.

## Patentansprüche

1. Vorrichtung (100) zur Anzeige des Wetters auf Abruf für eine Uhr, wobei diese Uhr mindestens einen Stundenzeiger und einen Minutenzeiger umfasst; wobei die Anzeigevorrichtung (100) mindestens Folgendes umfasst:
- ein erstes Anzeigeelement (110), wobei das mindestens eine erste Anzeigeelement (110) der Stundenzeiger oder der Minutenzeiger ist, der beweglich montiert ist, und mindestens eine Darstellung der Sonne (111) enthält;
- ein zweites Anzeigeelement (120): wobei das mindestens eine zweite Anzeigeelement (120) der Minutenzeiger oder der Stundenzeiger ist, der beweglich montiert ist, und mindestens ein Verdeckungselement (121) aufweist, das so konfiguriert ist, dass es die mindestens eine Darstellung der Sonne (111) verdeckt;
- einen ersten Mitnehmer: wobei der mindestens eine erste Mitnehmer so konfiguriert ist, dass er das mindestens eine erste Anzeigeelement (110) und das mindestens eine zweite Anzeigeelement (120) antreibt; und,
- eine Steuereinheit: wobei die mindestens eine Steuereinheit so konfiguriert ist, dass sie in Abhängigkeit von einem Datensatz (141) den mindestens einen ersten Antrieb so steuert, dass das mindestens eine erste Anzeigeelement (110) und das mindestens eine zweite Anzeigeelement (120) so angetrieben und/oder überlagert werden, dass die mindestens eine Sonnendarstellung (111) ganz oder teilweise durch das mindestens eine Verdunkelungselement (121) verdeckt wird.

2. Anzeigevorrichtung (100) nach Anspruch 1, wobei die mindestens eine Steuereinheit den mindestens einen ersten Mitnehmer auf Wunsch des Benutzers steuert.

3. Anzeigevorrichtung (100) nach Anspruch 1 oder 2, wobei der Datensatz (141) mindestens Folgendes umfasst:
- eine Wetterangabe (145);
- ein Datum (146);
- eine Stunde (147); und/oder
- eine geografische Position (148).

4. Anzeigevorrichtung (100) nach Anspruch 3, wobei der Datensatz (141) von der mindestens einen Steuereinheit über Radiofrequenzen, über Satelliten-Geopositionierung und/oder über drahtgebundene und/oder optische Kommunikation empfangen wird.

5. Anzeigevorrichtung (100) nach einem beliebigen der vorhergehenden Ansprüche, die mindestens einen zweiten Mitnehmer umfasst, der so konfiguriert ist, dass er das mindestens eine zweite Anzeigeelement (120) antreibt.

6. Anzeigevorrichtung (100) nach einem beliebigen der vorhergehenden Ansprüche, wobei das mindestens eine Verdunkelungselement (121) mindestens eine vorzugsweise blitzförmige Öffnung (122) umfasst, die so konfiguriert ist, dass sie die mindestens eine Sonnendarstellung (111) teilweise sichtbar macht.

7. Anzeigevorrichtung (100) nach einem beliebigen der vorhergehenden Ansprüche, wobei das mindestens eine erste Anzeigeelement (110) so konfiguriert ist, dass es die Position der Sonne in Bezug auf den Horizont anzeigt.

8. Anzeigevorrichtung (100) nach einem beliebigen der vorhergehenden Ansprüche, wobei das mindestens eine erste Anzeigeelement (110) so konfiguriert ist, dass es die Position der Sonne in Bezug auf die Himmelsrichtungen anzeigt.

9. Anzeigevorrichtung (100) nach einem der vorhergehenden Ansprüche, die einen Sekundenzeiger (130) umfasst, der die Horizontlinie anzeigt und von dem mindestens einen ersten Mitnehmer, dem mindestens einen zweiten Mitnehmer und/oder dem mindestens einen dritten Mitnehmer angetrieben wird.

10. Verfahren zum Anzeigen (500) mindestens einer Wettervorhersage, das von mindestens einer Anzeigevorrichtung (100) nach einem beliebigen der Ansprüche 1 bis 9 nach dem Empfang eines Datensatzes (141) durchgeführt wird; wobei das Anzeigeverfahren (500) mindestens Folgendes beinhaltet:
- Steuern des mindestens einen ersten Mitnehmers, des mindestens einen zweiten Mitnehmers und/oder des mindestens einen dritten Mitnehmers durch die mindestens eine Steuereinheit; und,
- Antreiben des mindestens einen ersten Anzeigeelements (110), das der Stundenzeiger oder der Minutenzeiger ist, und des mindestens einen zweiten Anzeigeelements (120), das der Minutenzeiger oder der Stundenzeiger ist, so dass eine Wettervorhersage angezeigt wird.

11. Anzeigeverfahren (500) nach Anspruch 10, das mindestens eine Inkrementierung des Datums (146) nach jedem der mindestens einen Befehle und Antrieb umfasst, so dass eine stündliche, tägliche und/oder wöchentliche Wettervorhersage angezeigt wird.

## Claims

1. Display device (100) of the weather on demand for a timepiece, this timepiece comprising at least an hour hand and a minute hand; said display device (100) comprising at least:
- one first indicator member (110): said at least one first indicator member (110) being the hour hand or the minute hand movably mounted and, including at least one representation of the sun (111);
- one second indicator member (120): said at least one second indicator member (120) being the hour hand or the minute hand movably mounted and, including at least one concealing element (121) configured to conceal said at least one representation of the sun (111);
- one first driver: said at least one first driver configured to drive said at least one first indicator member (110) and said at least one second indicator member (120); and
- one control unit: said at least one control unit being configured to control, according to a set of data (141), said at least one first driver so as to drive and/or to superimpose said at least one first indicator member (110) and said at least one second indicator member (120) in such a way that said at least one representation of the sun (111) is totally or partly concealed by said at least one concealing element (121).

2. Display device (100) according to claim 1, wherein said at least one control unit controls said at least one first driver at the request of the user.

3. Display device (100) according to claim 1 or 2, wherein said set of data (141) includes at least:
- a piece of weather data (145);
- a date (146);
- a time(147); and/or
- a geographic position (148).

4. Display device (100) according to claim 3, wherein said set of data (141) is received by said at least one control unit via radio frequencies, via a global positioning system, and/or via wired and/or optical communication.

5. Display device (100) according to any one of the previous claims, which comprises at least one second driver configured to drive said at least one second indicator member (120).

6. Display device (100) according to any one of the previous claims, wherein said at least one concealing element (121) comprises at least one opening (122), preferably in the shape of a lightning bolt, configured to let said at least one representation of the sun (111) partially appear.

7. Display device (100) according to any one of the previous claims, wherein said at least one first indicator member (110) is configured to indicate the position of the sun with respect to the horizon.

8. Display device (100) according to any one of the previous claims, wherein said at least one first indicator member (110) is configured to indicate the position of the sun with respect to the cardinal points.

9. Display device (100) according to any one of the previous claims, which comprises a second hand (130) indicating the line of the horizon and being driven by said at least one first driver, said at least one second driver and/or at least one third driver.

10. Method (500) for displaying at least one weather forecast implemented by at least one display device (100) according to any one of claims 1 to 9 after reception of a set of data (141); said display method (500) comprising at least one:
- Control of said at least one first driver, of said at least one second driver and/or at least one third driver by said at least one control unit; and
- Driving of said at least one first indicator member (110) which is the hour hand or the minute hand and of said at least one second indicator member (120) which is the minute hand or the hour hand so as to display a weather forecast.

11. Display method (500) according to claim 10, which comprises at least one incrementation of said date (146) after each said at least one control and driving so as to display an hourly, daily and/or weekly weather forecast.
